# EUROPEAN PATENT APPLICATION

(11) **EP 0 840 425 A1**
(43) Date of publication of application: **06.05.1998**
(21) Application number: 97917425.7
(22) Date of filing: 15.04.1997
(51) Int. Cl.: H02K 7/06

(54) **MOTOR-DRIVEN CYLINDER**

(30) Priority: 19.04.1996 JP 122499/96
(71) Applicant: SINTOKOGIO LTD., Nakamura-ku Nagoya Aichi 450 (JP)
(72) Inventor: KIMURA, Kunimasa, Aichi 442 (JP)
(74) Representative: Behrens, Dieter, Dr.-Ing.
(86) International application number: JP9701337
(87) International publication number: WO9740571

(57) **Abstract**

A motor-driven cylinder with a novel configuration that can be used even at a narrow space where a conventional cylinder cannot be mounted and that has a length shorter than a conventional one which has the same stroke. The cylinder comprises a motor (1), a ball nut (4) linked to the motor (1) via a transmission member (3) and rotatable on the thrust bearing (5) mounted to the outer diameter portion, and a ball screw (6) screwed into the ball nut (4), with one end projecting outside the cylinder case (2).

## Description

### Technical Field

This invention relates to an electric cylinder wherein a rotary motion caused by an electromotor is transformed into a linear motion by means of a screw mechanism.

### Background Art

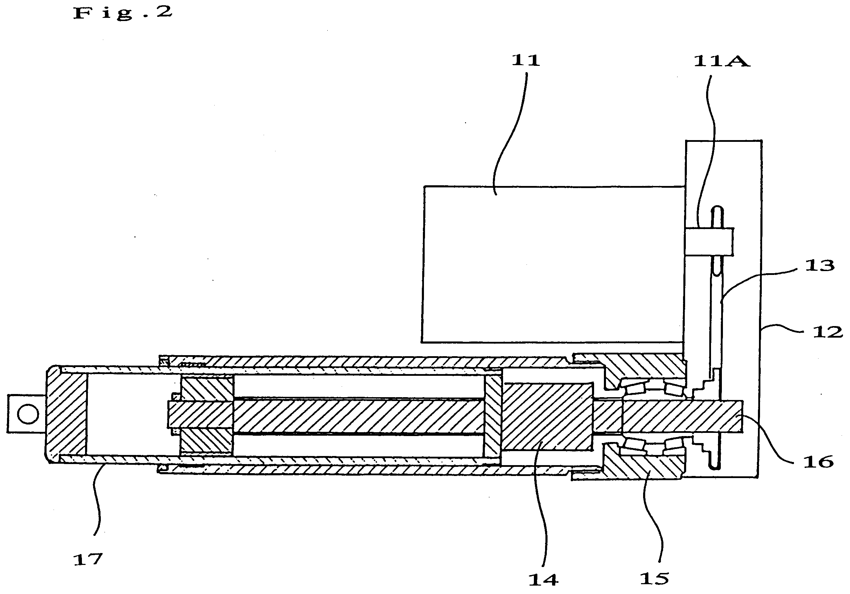

It is well known that electric cylinders are widely used in various plants and machines. We will now explain a typical electric cylinder by reference to Fig. 2. The conventional cylinder of Fig. 2 mainly comprises an electromotor 11, a ball screw 16 connected to the rotary shaft 11A of the electromotor 11 via a transmission member 13, and a ball nut 14 mated with the ball screw 16. The ball nut has a thrust bearing 15 at its end. The thrust bearing 15 and a cylinder case 12 are consolidated into one body. A rod 17 is fixed to the ball nut 14. In this electric cylinder, when the ball screw 16 rotates through the rotary drive of the rotary shaft 11A of the electromotor 11, the ball nut 14 makes a linear motion through its screw mechanism. Thus, the rod 17 fixed to the ball nut 14 reciprocates backward and forward.

However, the above-mentioned electric cylinder tends to have a longitudinal dimension greater than that of an oil- and air-pressure cylinder, when both cylinders have the same stroke. In this regard, the electric cylinder has a drawback over the air- and oil-pressure cylinder in that possibly the electric cylinder cannot be used in a place where the oil- and air-pressure cylinder can be used, due to its greater longitudinal dimension.

### Disclosure of Invention

This invention was made to solve the above problem. Its purpose is to provide an electric cylinder of a novel structure, the longitudinal measure of which is less than that of the conventional one having the same stroke.

To achieve the above purpose the electric cylinder of this invention comprises an electromotor, a ball nut connected to the electromotor via a transmission member and rotatably borne by a thrust bearing disposed around its periphery, and a ball screw that is mated with the ball nut, one end of which ball screw protrudes from a cylinder case.

### Brief Description of Drawings

Fig. 1 is a vertical section showing the main part of an embodiment of this invention.

Fig. 2 is a vertical section showing a prior-art electric cylinder.

### Modes for Carrying Out the Invention

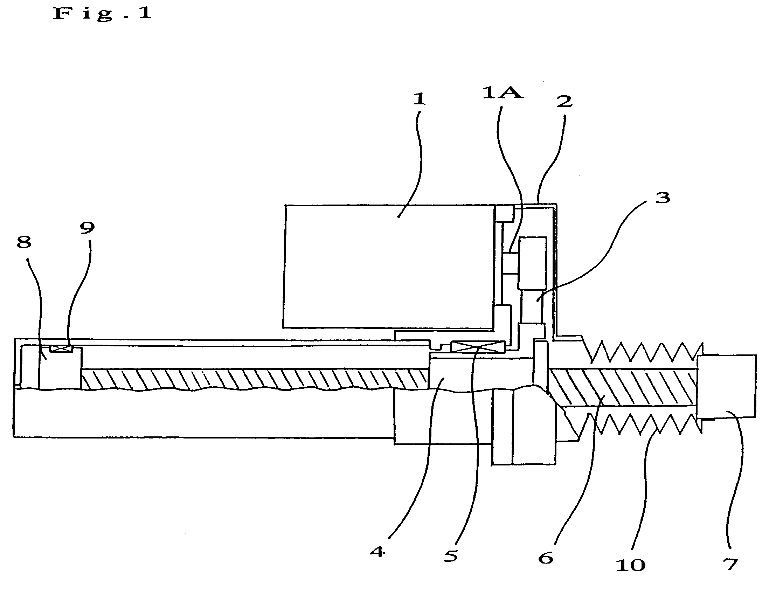

A preferred embodiment of this invention will now be explained in detail by reference to Fig. 1. An electromotor 1 is mounted on the outside of a cylinder case 2. The shaft 1A of the electromotor 1 penetrates into the cylinder case 2. The shaft 1A is connected to a ball screw 4 via a transmission member 3. A thrust bearing 5, fixedly mounted on the cylinder case 2, is disposed about the periphery of the ball nut 4 so as to rotatably bear the ball nut 4. The ball nut 4 is mated with a ball screw 6, one end of which ball screw protrudes from the cylinder case 2. An end piece 7 is fixed to the end part of the protruding ball screw 6, while a guide 8 and a sliding bearing 9 are fixed to its other end part. A pair of bellows 10 for preventing dust, is disposed such that its inner and outer ends are connected to the cylinder case 2 at the entrance of the ball screw 6 and the end piece 7, respectively.

The practical operation of the above electric cylinder will now be explained. The rotary drive of the shaft 1A of the electromotor 1 is transmitted to the ball nut 4 via a transmission member 3 so as to rotate the ball nut 4. This rotary nut mechanism causes a linear motion of the ball screw 6 mated with the ball nut 4. As one end of the ball screw 6 protrudes from the cylinder case 2 and is provided with the end piece 7 fixedly mounted thereon, the ball screw 6 acts as a rod so as to move forward or backward in correspondence to the rotational direction of the electromotor 1. The pair of bellows 10 expands or contracts corresponding to the motion of the end piece 7, to prevent dust from adhering to the ball screw 6.

### Effects of the Invention

As is clear from the above descriptions, in the electric cylinder of this invention the thrust bearing is disposed about the periphery of the ball nut and the ball nut is rotated by the electromotor to linearly move the ball screw such that the ball screw acts as a rod as in the conventional cylinder to push an object out. Thus, it can save the space where the thrust bearing is disposed at the end part of the ball screw in the conventionally-structured cylinder so that its longitudinal dimension can be shortened by that space. The electric cylinder of this invention can thus be disposed even in a space where the conventional cylinder cannot be accommodated.

## Claims

1. An electric cylinder comprising
an electromotor,
a ball nut connected to the electromotor via a transmission member and rotatably borne by a thrust bearing disposed around the periphery of the ball nut, and
a ball screw mated with the ball nut, one end of which ball screw protrudes from a cylinder case.
